# FASCICULE DE BREVET EUROPEEN

(11) **EP 2 901 088 B1**
(45) Date de publication et mention de la délivrance du brevet: **01.02.2017**
(21) Numéro de dépôt: 13766323.3
(22) Date de dépôt: 24.09.2013
(51) Int. Cl.: F24H 1/12

(54) **DISPOSITIF DE CONDITIONNEMENT THERMIQUE DE FLUIDE POUR VEHICULE AUTOMOBILE ET APPAREIL DE CHAUFFAGE ET/OU DE CLIMATISATION CORRESPONDANT**
VORRICHTUNG ZUR THERMISCHEN FLÜSSIGKEITSKONDITIONIERUNG FÜR EIN KRAFTFAHRZEUG SOWIE ENTSPRECHENDE HEIZ- UND/ODER KLIMAANLAGENVORRICHTUNG
DEVICE FOR THERMALLY CONDITIONING FLUID FOR A MOTOR VEHICLE AND CORRESPONDING HEATING AND/OR AIR CONDITIONING APPARATUS

(30) Priorité: 28.09.2012 FR 1259164
(43) Date de publication de la demande: 05.08.2015
(73) Titulaire: VALEO SYSTEMES THERMIQUES, 78320 Le Mesnil Saint-Denis (FR)
(72) Inventeur: LEBORGNE, José, F-78990 Elancourt (FR); MA, Zhenxia, F-78180 Montigny le Bretonneux (FR); PIERRON, Frédéric, F-78120 Rambouillet (FR); TELLIER, Laurent, F-75116 Paris (FR)
(74) Mandataire: Metz, Gaëlle
(86) Numéro de dépôt international: PCT/EP2013/069878
(87) Numéro de publication internationale: WO 2014/048933

(56) Documents cités:
- EP-A1- 0 418 179
- EP-A1- 1 669 688
- WO-A1-93/02722
- WO-A1-98/14736
- CN-U- 201 685 752
- FR-A- 809 123
- US-A- 3 090 376

## Description

L'invention concerne un dispositif de conditionnement thermique de fluide, tel qu'un dispositif de chauffage électrique de fluide pour véhicule automobile. L'invention s'applique plus particulièrement aux appareils de chauffage et/ou de climatisation de véhicules automobiles comportant un tel dispositif de chauffage.

Un dispositif de conditionnement thermique selon le préambule de la revendication 1 est connu du document WO 98/14736.

De façon habituelle, le réchauffage de l'air destiné au chauffage de l'habitacle est assuré par le passage d'un flux d'air à travers un échangeur thermique, plus précisément par un échange thermique entre le flux d'air et un fluide. Il s'agit généralement du fluide, de refroidissement dans le cas d'un moteur thermique.

Un tel mode de chauffage peut s'avérer inadapté ou insuffisant pour garantir un chauffage de l'habitacle d'un véhicule automobile, ainsi qu'un désembuage et un dégivrage.

Toutefois, un mode de chauffage rapide et efficace de l'habitacle du véhicule, en particulier pour assurer un réchauffement de l'habitacle ou de dégivrage ou de désembuage du véhicule avant utilisation en environnement très froid ou encore lorsqu'une montée très rapide de la température est souhaitée.

En outre, dans le cas d'un véhicule électrique, la fonction de chauffage n'est plus réalisée par la circulation du fluide de refroidissement dans l'échangeur thermique. On peut cependant prévoir un circuit d'eau pour le chauffage de l'habitacle mais ce mode de chauffage peut aussi s'avérer inadapté ou insuffisant pour garantir un chauffage rapide et efficace de l'habitacle du véhicule.

Par ailleurs, afin de réduire l'encombrement et le coût d'un circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant est dans ce cas, utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures. Par exemple, lorsqu'une température d'air extérieur est trop basse, cet air ne peut pas être utilisé comme source d'énergie thermique.

Une solution connue consiste à adjoindre à l'échangeur thermique ou au circuit d'eau ou encore à la boucle de climatisation, un dispositif de chauffage électrique additionnel.

Le dispositif de chauffage électrique additionnel peut être adapté pour chauffer en amont le fluide, tel que le fluide de refroidissement pour le moteur thermique, ou l'eau du circuit d'eau de chauffage de l'habitacle du véhicule électrique ou encore le fluide réfrigérant de la boucle de climatisation.

De façon connue, le dispositif de chauffage électrique additionnel comporte un ou plusieurs modules de chauffe en contact avec le fluide. à chauffer.

Plus précisément, un module de chauffe comporte un noyau et un élément chauffant réalisé sous la forme d'une enveloppe cylindrique entourant le noyau, afin de définir un circuit de guidage du fluide entre le noyau et l'enveloppe cylindrique. L'enveloppe cylindrique est donc la source d'énergie thermique.

Selon une solution connue, un élément chauffant présente des moyens électriques de chauffer par exemple, une ou des résistances chauffantes réalisés par sérigraphie sous forme de pistes résistives sur la surface externe de l'élément chauffant.

Toutefois, une circulation axiale du fluide dans le circuit de guidage entre le noyau et l'enveloppe cylindrique, diminue le transfert thermique entre l'enveloppe cylindrique et le fluide.

Afin d'augmenter le rendement de l'échange thermique entre l'élément chauffant et le fluide circulant entre le noyau et l'élément chauffant, il est donc préférable d'éviter une circulation du fluide parallèle à l'axe de l'élément chauffant sous forme d'enveloppe cylindrique.

Une solution connue est de générer un mouvement hélicoïdal du fluide circulant dans le circuit de guidage. On augmente ainsi l'échange thermique entre l'élément chauffant par exemple sous forme d'enveloppe cylindrique et le fluide circulant à l'intérieur de cette enveloppe cylindrique.

Pour ce faire, il a été proposé que le noyau présente sur sa surface externe une rainure sensiblement hélicoïdale. Un tel noyau est donc de réalisation complexe.

Cette rainure hélicoïdale permet de forcer le tournoiement du fluide. Toutefois, avec une telle solution il a été constaté un manque d'homogénéité de vitesses à l'entrée du circuit de guidage du fluide et une perte de charge élevée.

L'invention a donc pour objectif de proposer un dispositif de conditionnement thermique, notamment un dispositif de chauffage électrique ayant un rendement amélioré.

À cet effet, l'invention a pour objet un dispositif de conditionnement thermique d'un fluide pour véhicule automobile, comprenant les caractéristiques selon la revendication 1.

Ainsi, on peut créer "naturellement" un tournoiement du fluide, juste avant l'arrivée du fluide dans le circuit de guidage. L'apport d'hélices matérialisées sur la surface externe du noyau du module thermique ou toute autre pièce permettant la création d'un tournoiement de fluide sont optionnels.

Le mouvement de tournoiement du fluide se poursuit dans le circuit de guidage tout au long du noyau de façon à améliorer le transfert thermique entre le fluide et l'enveloppe entourant le noyau.

Dans le cas d'un dispositif de chauffage, le dispositif cède au fluide un maximum d'énergie thermique produite par l'enveloppe par exemple cylindrique, mais le système s'applique aussi bien pour enlever de la chaleur au fluide.

Un tel dispositif peut fonctionner pendant plusieurs heures.

Ce dispositif présente aussi l'avantage de créer peu de pertes de charge dans le circuit du fluide à des débits pouvant aller jusqu'à 1000 L/h voire 2500 L/h.

Le dispositif peut en outre comporter une ou plusieurs caractéristiques suivantes, prises séparément ou en combinaison ;
- le canal d'entrée comporte une rampe de guidage du fluide de forme sensiblement hélicoïdale autour d'un axe sensiblement parallèle à un axe longitudinal du module thermique, la forme de la rampe permet notamment de conserver voire d'amplifier le mouvement de tournoiement ;
- le canal d'entrée présente une forme sensiblement coudée ;
- le boîtier d'entrée comprend au moins un bol d'alimentation de forme sensiblement cylindrique raccordé fluidiquement au circuit de guidage d'un modale thermique ;
- ledit dispositif comprend deux conduits séparés par une paroi de séparation de façon à définir les deux canaux d'entrée de fluide,
- lesdits conduits comportent respectivement une extrémité communiquant fluidiquement avec un circuit de guidage du fluide associé et présentant une rampe de guidage du fluide de forme sensiblement hélicoïdale autour d'un axe sensiblement parallèle à un axe longitudinal du modules thermique ;
- les deux conduits présentent une tête d'entrée de fluide commune, et dans lequel les deux conduits et la tête d'entrée de fluide commune sont réalisés d'une seule pièce rapportée sur le boîtier d'entrée ;
- les deux conduits sont formés d'une seule pièce avec le boîtier d'entrée ;
- le boîtier d'entrée présente une tubulure d'admission de fluide agencée radialement par rapport à un axe longitudinal d'un module thermique ;
- le noyau d'un module thermique comporte un corps de noyau autour duquel est défini le circuit de guidage du fluide et une extrémité d'entrée reçue dans une cavité du boîtier d'entrée, et ledit dispositif comprend des déflecteurs disposés entre le corps du noyau et l'extrémité d'entrée du noyau ;
- les déflecteurs sont agencés radialement par rapport à un axe longitudinal du module thermique ;
- les déflecteurs sont agencés selon le sens de tournoiement du fluide généré par le canal d'entrée du fluide ;
- les déflecteurs sont réalisés d'une seule pièce avec le noyaux ;
- le boîtier d'entrée comprend les déflecteurs ;
- ledit dispositif est agencé dans un circuit de chauffage de l'habitacle dudit véhicule.

L'invention concerne également un appareil de chauffage et/ou climatisation pour véhicule automobile, caractérisé en ce qu'il comporte un dispositif de conditionnement thermique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue en perspective d'un dispositif de chauffage électrique de fluide pour véhicule automobile selon la présente invention, partiellement représenté en transparence,
- la figure 2 représente le dispositif de chauffage électrique de la figure 1 représenté en plein auquel on a ôté un boîtier d'entrée de fluide,
- la figure 3a est une vue de dessus du boîtier d'entrée selon un premier mode de réalisation,
- la figure 3b est une vue en coupe transversale du boîtier d'entrée de la figure 3a,
- la figure 4a est une vue de dessus en perspective du boîtier d'entrée selon un deuxième mode de réalisation,
- la figure 4b est une vue en coupe transversale du boîtier d'entrée de la figure 4a,
- la figure 5a est une vue en coupe transversale du boîtier d'entrée selon un troisième mode de réalisation,
- la figure 5b représente de façon schématique la circulation du fluide dans le boîtier d'entrée de la figure 5a en vue de dessus,
- la figure 5c représente de façon simplifiée une vue en perspective des canaux d'entrée du boîtier d'entrée de la figure 5a,
- la figure 5d représente de façon simplifiée une vue de dessus des canaux d'entrée de la figure 5c,
- la figure 6 représente de façon schématique une vue en perspective montrant la circulation du fluide dans le boîtier d'entrée de la figure 5a puis autour des noyaux des modules de chauffe selon un mouvement sensiblement hélicoïdal,
- la figure 7 est une vue de dessus schématisant le tournoiement du fluide à l'entrée d'un circuit de guidage dans un module de chauffe de la figure 6,
- la figure 8 est une vue partielle en perspective d'un noyau du module de chauffe selon un mode de réalisation,
- la figure 9 est une vue partielle en perspective d'un noyau du module de chauffe selon une variante du mode de réalisation représenté à la figure 8.

Dans ces figures, les éléments sensiblement identiques portent les mêmes références.

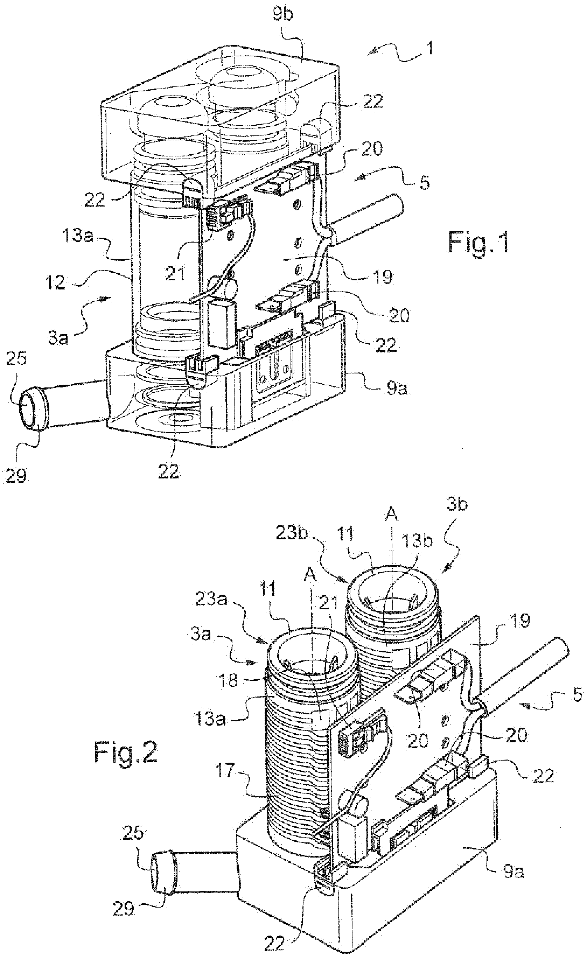

La figure 1 représente un dispositif de conditionnement thermique tel qu'un dispositif de chauffage électrique de fluide pour véhicule automobile 1 pour un appareil de chauffage et/ou climatisation.

Le dispositif de chauffage électrique 1 est par exemple un dispositif de chauffage additionnel permettant de chauffer d'un fluide avant son entrée dans un circuit de chauffage d'un fluide pour le chauffage de l'habitacle d'un véhicule électrique.

Selon un autre exemple, le dispositif de chauffage électrique 1 est disposé en amont d'un évaporateur d'une boucle de climatisation apte à fonctionner en mode pompe à chaleur, de façon à chauffer le fluide réfrigérant.

Selon encore un autre exemple, le dispositif de chauffage électrique 1 est agencé en amont d'un échangeur thermique utilisant le fluide de refroidissement d'un moteur thermique comme fluide caloporteur.

On pourrait aussi prévoir un tel dispositif de chauffage électrique 1 en amont d'un échangeur thermique destiné à la régulation thermique d'un dispositif de stockage de l'énergie électrique, parfois qualifié d'ensemble de batteries, pour un véhicule à propulsion électrique ou hybride.

L'invention peut aussi s'appliquer à un dispositif permettant de refroidir un fluide.

Le dispositif de chauffage électrique 1 représenté comprend :
- un premier module de chauffe 3a et un deuxième module de chauffe 3b,
- un moyen de commande 5 pour contrôler l'alimentation électrique des modules de chauffe 3a, 3b,
- une entrée de fluide, telle qu'un boîtier d'entrée de fluide 9a, et
- une sortie de fluide 9b, telle qu'un boîtier de sortie de fluide 9b.

Bien entendu on peut prévoir que le dispositif de chauffage électrique comprenne plus de deux modules de chauffe selon les besoins.

En se référant à la figure 2, un module de chauffe 3a, 3b comporte :
- un noyau 11, et
- un élément chauffant 13a, 13b.

Selon l'exemple illustré, un élément chauffant 13a, 13b est réalisé sous la forme d'une enveloppe entourant le corps 12 du noyau 11.

Le noyau 11 et l'élément chauffant 13a, 13b sont par exemple sensiblement cylindriques et s'étendent selon un axe longitudinal A.

Le noyau 11 et l'élément chauffant 13a, 13b peuvent être concentriques.

Un module de chauffe 3a, 3b présente donc une forme générale sensiblement cylindrique définie par l'élément chauffant 13a, 13b.

Le noyau 1 et l'élément chauffant 13a, 13b définissent un circuit de guidage du fluide à chauffer, tel que du liquide. Le circuit de guidage est défini autour de la surface externe du corps 12 du noyau 11, il est donc à l'extérieur du noyau 11 et à l'intérieur de l'élément chauffant 13a ou 13b. En d'autres termes, la surface externe du corps 12 du noyau 11 et la surface interne de l'élément chauffant 13a ou 13b associé, définissent un volume de circulation du fluide chauffer autour du noyau 11. Le fluide provenant du boîtier d'entrée de fluide 9a peut circuler dans ce volume de circulation, puis vers le boîtier de sortie 9b.

Selon le mode de réalisation illustré sur les figures 1 et 2, chaque module de chauffe 3a, 3b comprend un circuit de guidage du fluide entre le noyau 11 et l'élément chauffant 13a, 13b respectif.

Par ailleurs, les éléments chauffants 13a, 13b sont commandés par le moyen de commande 5 pour chauffer le fluide par échange de chaleur entre les éléments chauffants 13a, 13b et le fluide circulant dans le circuit de guidage.

Selon le mode de réalisation illustré, un élément chauffant 13a, 13b, présente au moins un moyen électrique de chauffe tel qu'une résistance chauffante 17. Cette résistance chauffante 17 peut être réalisée sous la forme d'une piste résistive 17. Selon l'exemple de réalisation représenté, un élément chauffant 13a, 13b présente deux moyens électriques de chauffe réalisés sous la forme de deux pistes résistives 17.

Plus précisément, les deux pistes résistives 17 s'étendent par exemple parallèlement au moins partiellement sur la hauteur de l'élément chauffant 13a, 13b. Les deux pistes résistives 17 sont par exemple imbriquées l'une dans l'autre ou entrelacées.

Les pistes résistives 17 sont par exemple réalisées par sérigraphie sur la surface externe de l'élément chauffant 13a, 13b, c'est-à-dire sur la surface opposée à la surface interne de l'élément chauffant 13a, 13b en regard du noyau 11. Les pistes résistives 17 sont donc hors du circuit de guidage du fluide à chauffer.

Grâce à ce mode de réalisation la chaleur produite par la résistance est directement transmise au fluide à chauffer à travers la paroi de l'élément chauffant 13a ou 13b correspondant, ce qui minimise les pertes thermiques et réduit l'inertie thermique du dispositif, le fluide peut dès lors être chauffé rapidement.

Le moyen de commande 5 contrôle les éléments chauffants 13a, 13b en contrôlant l'alimentation des résistances chauffantes 17, réalisées sous forme de pistes résistives 17 dans cet exemple.

À cet effet les pistes résistives 17 sont connectées au moyen de commande 5. On prévoit pour ce faire des bornes de connexion 18 électriquement reliées aux extrémités des pistes résistives 17. Le moyen de commande 5 est connecté électriquement à ces bornes de connexion 18.

En outre, on peut prévoir un capteur de température (non représenté sur les figures) pour mesurer la température d'un élément chauffant 13a, 13b associé. Il peut s'agir d'une thermistance, telle qu'une sonde « CTN » pour Coefficient de Température Négatif ou « NTC » pour l'anglais « Negative Temperature Coefficient », dont la résistance diminue de façon uniforme avec la température. Ce capteur de température peut être brasé ou soudé sur la surface externe de l'élément chauffant 13a, 13b associé.

Dans ce cas, le moyen de commande 5 contrôle l'alimentation des résistances chauffantes en fonction d'une consigne de chauffage et de la température mesurée par le capteur de température.

Ce moyen de commande 5 de l'élément chauffant 13a, 13b, comporte un support de circuit électrique 19, tel qu'une carte à circuit imprimé (ou PCB en anglais pour "Printed circuit board"). Ce support de circuit électrique 19 porte des composants électroniques et/ou électriques. On peut citer notamment un ou des interrupteurs de courant électrique pour contrôleur l'alimentation électrique des éléments chauffants 13a, 13b.

Outre les interrupteurs de courant électrique, ces composants électroniques et/ou électriques peuvent par exemple comporter le microcontrôleur, des connecteurs électriques reliant les résistances chauffantes 17 aux interrupteurs de courant électrique, des connecteurs d'alimentation haute tension 20 et un connecteur d'alimentation basse tension et de bus de données 21.

On peut prévoir de plus des moyens de positionnement 22 du support de circuit électrique 19 tels que des moyens de clipsage par exemple agencés aux quatre coins du support de circuit électrique 19.

Par ailleurs, les modules de chauffe 3a, 3b sont par exemple identiques.

Les deux modules de chauffe 3a, 3b sont selon le mode de réalisation illustré disposés côte à côte de façon sensiblement parallèle.

Bien entendu, d'autres agencements sont envisageables, par exemple en disposant les deux modules de chauffe 3a, 3b bout à bout dans le sens longitudinal des modules de chauffe 3a, 3b.

La disposition côte à côte permet de réduire l'encombrement du dispositif de chauffage 1 dans le sens longitudinal. De plus, cet agencement présente une faible inertie de chauffe et une faible perte de charge.

Les modules de chauffe 3a, 3b présentent respectivement deux extrémités longitudinalement opposées : une extrémité d'entrée 23a, 23b et une extrémité de sortie respectivement connectées au boîtier d'entrée 9a et au boîtier de sortie 9b.

Pour ce faire, les noyaux 11 comportent respectivement une extrémité d'entrée 23a, 23b et une extrémité de sortie raccordée au corps 12 du noyau 11.

En ce qui concerne le boîtier d'entrée de fluide 9a, ce dernier comprend un canal d'entrée 25 de fluide communiquant avec le circuit de guidage du premier module de chauffe 3a et avec le circuit de guidage du deuxième module de chauffe 3b.

Le canal d'entrée 25 de fluide est conformé pour générer un mouvement de tournoiement du fluide avant l'entrée du fluide dans les circuits de guidage des modules de chauffe 3a, 3b.

Pour ce faire, le canal d'entrée 25 présente au moins une portion sensiblement courbe pour générer le tournoiement du fluide.

Plus précisément, au moins une paroi délimitant ce canal d'entrée 25 est sensiblement courbe de façon à générer un tournoiement du fluide.

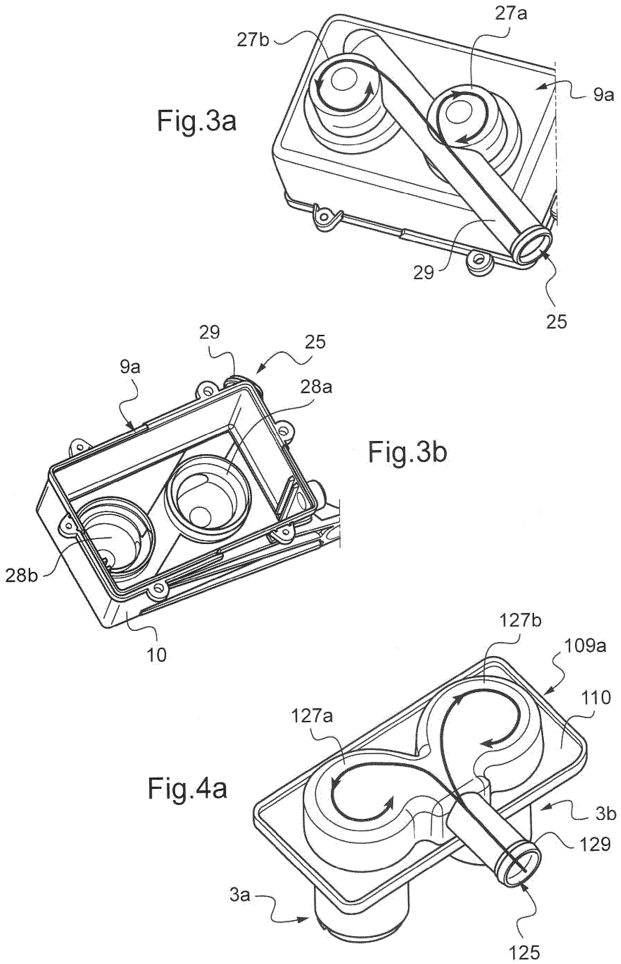

Selon un premier mode de réalisation illustré sur les figures 1 et 3a, 3b, le boîtier d'entrée de fluide 9a présente une base 10 sensiblement parallélépipédique avec deux grands côtés opposés et deux petits côtés opposés. Cette base est munie d'un premier bol d'alimentation 27a et d'un deuxième bol d'alimentation 27b. Ces bols d'alimentation 27a, 27b présentent respectivement une première cavité 28a et une deuxième cavité 28b (cf figure 3b) de forme cylindrique à fond sphérique, pour recevoir les extrémités d'entrée 23a. 23b respectives des modules de chauffe 3a, 3b.

Le boîtier d'entrée de fluide 9a comporte également une tubulure saillante d'admission de fluide 29 ; cette tubulure d'admission 29 est commune pour les deux modules de chauffe 3a, 3b.

Selon l'invention, la tubulure d'admission 29 est agencée de façon tangente aux deux bols d'alimentation 27a et 27b.

La tubulure d'admission de fluide 29 s'étend par exemple sensiblement en diagonale par rapport au boîtier d'entrée de fluide 9a.

Le canal d'entrée 25 est ainsi défini par la tubulure d'admission de fluide 29, et les cavités 28a, 28b du boîtier d'entrée de fluide 9a. Le canal d'entrée 25 raccorde ainsi fluidiquement la tubulure d'admission 29 aux deux cavités 28a, 28b des bols d'alimentation 27a. 27b du boîtier d'entrée de fluide 9a.

Selon cette première variante, le canal d'entrée 25 est commun pour les deux modules de chauffe 3a, 3b jusqu'à déboucher dans les deux bols d'alimentation 27a, 27b ; le canal d'entrée 25 se divise en deux au niveau des deux cavités 28a, 28b. Les deux cavités

Cet agencement de la tubulure d'admission 29 et donc une portion du canal d'entrée 25 de façon tangente aux bols d'alimentation 27a, 27b, et la forme cylindrique de la cavité 28a, 28b des bols d'alimentation 27a. 27b permet de générer un tournoiement du fluide comme représenté de façon schématique par les flèches sur la figure 3a. Les parois des bols d'alimentation 27a, 27b sont donc courbes et délimitent l'extrémité du canal d'entrée 25 débouchant dans un circuit de guidage d'un module de chauffe 3a, 3b.

De façon similaire, un canal de sortie du fluide est forme dans le boîtier de sortie de fluide 9b et communique avec le circuit de guidage du premier module de chauffe 3a et avec le circuit de guidage du deuxième module de chauffe 3b.

Comme on peut le voir sur la figure 1, le boîtier de sortie de fluide 9b présente sensiblement la même forme que le boîtier d'entrée de fluide 9a. Il présente ainsi une base sensiblement parallélépipédique présentant des bols munis de deux cavités pour recevoir les extrémités de sortie des modules de chauffe 3a, 3b et d'une tubulure saillante de sortie de fluide du dispositif de chauffage électrique 1, destinée à être raccordée à un circuit de fluide chauffé.

Les boîtiers d'entrée 9a et de sortie 9b sont selon cet exemple raccordés symétriquement, aux deux extrémités opposées des modules de chauffe 3a, 3b.

L'écoulement du fluide s'effectue ainsi depuis la tubulure d'admission de fluide 29 du boîtier d'entrée 9a, dans le canal d'entrée 25, puis en parallèle dans les circuits de guidage des modules de chauffe 3a, 3b et ressort dans le canal de sortie du boîtier de sortie 9b puis par la tubulure de sortie.

Du fait du tournoiement du fluide généré avant l'arrivée dans les circuits de guidage à l'intérieur du module de chauffe 3a, 3b, le fluide suit un trajet sensiblement hélicoïdal sans nécessiter la présence d'une rainure hélicoïdale ou un quelconque autre moyen agencé sur la surface externe du noyau 11. En effet, le fluide est constamment projeté sur la surface interne de l'enveloppe cylindrique 3a, 13b.

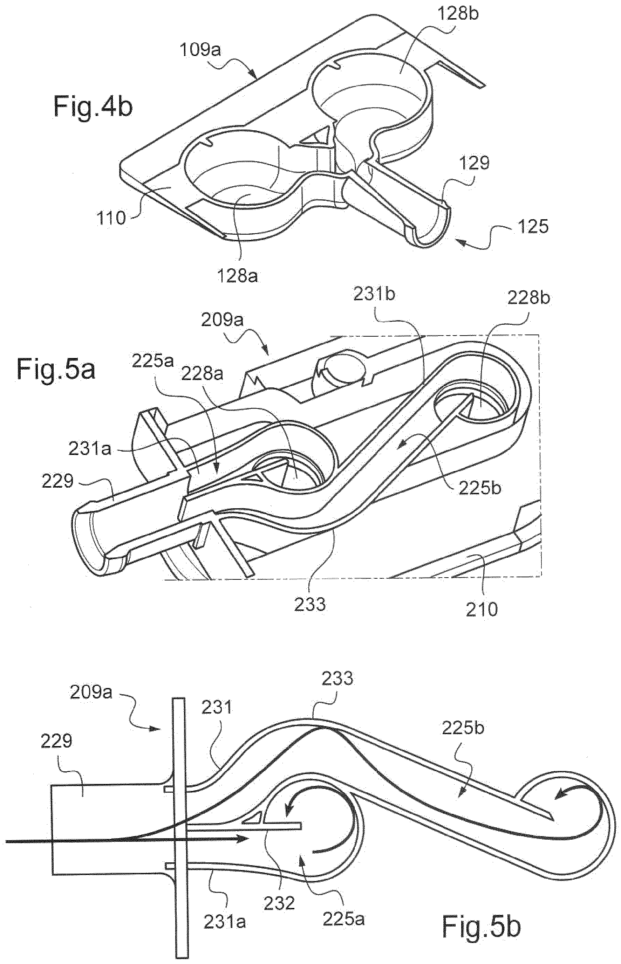

Selon un deuxième mode de réalisation illustré sur les figures 4a et 4b, le boîtier d'entrée de fluide 109a présente une base sensiblement parallélépipédique 110 présentant deux cylindres d'alimentation 127a, 127b présentant respectivement une cavité 128a, 128b pour recevoir les extrémités d'entrée 23a, 23b respectives des modules de chauffe 3a, 3b. Les cavités 128a, 128b sont donc sensiblement cylindrique.

Le boîtier d'entrée de fluide 109a comporte également une tubulure saillante d'admission de fluide 129 commune pour les deux modules de chauffe 3a, 3b. Selon l'exemple illustré, cette tubulure d'admission 129 est agencée sur un grand côté de la base 110 du boîtier d'entrée de fluide 109a.

Ce deuxième mode de réalisation diffère du premier mode de réalisation représenté sur les figures 3a, 3b par le fait que la tubulure d'admission 129 s'étend radialement par rapport à l'axe longitudinal A des modules de chauffe 3a, 3b. Ainsi, la tubulure d'admission est agencée sensiblement perpendiculairement à un côté de la base 110 du boîtier d'entrée 109a. De plus, le canal d'entrée 125 se divise en deux pour alimenter en parallèle respectivement les deux cylindres d'alimentation 127a, 127b.

La forme cylindrique des cylindres d'alimentation 127a, 127b permet de générer un tournoiement du fluide comme représenté de façon schématique par les flèches sur la figure 4a.

Bien entendu, le boîtier de sortie de fluide (non représenté sur les figures 4a, 4b) peut être identique au boîtier d'entrée de fluide 109a.

Selon un troisième mode de réalisation illustré sur les figures 5a à 7, le boîtier d'entrée de fluide 209a présente une base sensiblement parallélépipédique 210 munie d'une première cavité 228a et d'une deuxième cavité 228b par exemple de forme cylindrique à fond sphérique pour recevoir les extrémités d'entrée 23a, 23b respectives des modules de chauffe 3a, 7b.

Le boîtier d'entrée de fluide 209a comporte également une tubulure saillante d'admission de fluide 229 du dispositif de chauffage électrique 1. Cette tubulure d'admission 229 s'étend radialement par rapport à l'axe longitudinal A des modules de chauffe 3a, 3b. Selon l'exemple illustré, la tubulure d'admission 229 est agencée sur un petit côté de la base 210 du boîtier d'entrée de fluide 209a, et sensiblement perpendiculairement à ce petit côté.

Le boîtier d'entrée de fluide 209a comporte selon ce troisième mode de réalisation, deux canaux d'entrée 225a et 225b raccordés fluidiquement d'une part à la tubulure d'admission 229 et d'autre part à une cavité respective 228a, 228b du boîtier d'entrée de fluide 209a.

Les canaux d'entrée 225a, 225b raccordent ainsi fluidiquement la tubulure d'admission 229 commune aux deux cavités 228a, 228b du boîtier d'entrée de fluide 209a.

Un premier canal d'entrée 225a raccorde fluidiquement la tubulure d'admission 229 à la cavité 228a et un deuxième canal d'entrée 225b raccorde la même tubulure d'admission 229 à l'autre cavité 228b du boîtier d'entrée de fluide 209a.

Le premier canal 225a est par exemple raccordé à la cavité 228a la plus proche et le deuxième canal 225b est raccordé à la cavité 228b la plus éloignée. La notion de proximité est établie par rapport au côté sur lequel est agencée la tubulure d'admission 229.

À cet effet, un premier conduit 231a et un deuxième conduit 231 b peuvent être formés dans le boîtier d'entrée 209a et permettent de définir respectivement le premier canal d'entrée 225a et le deuxième canal d'entrée 225b.

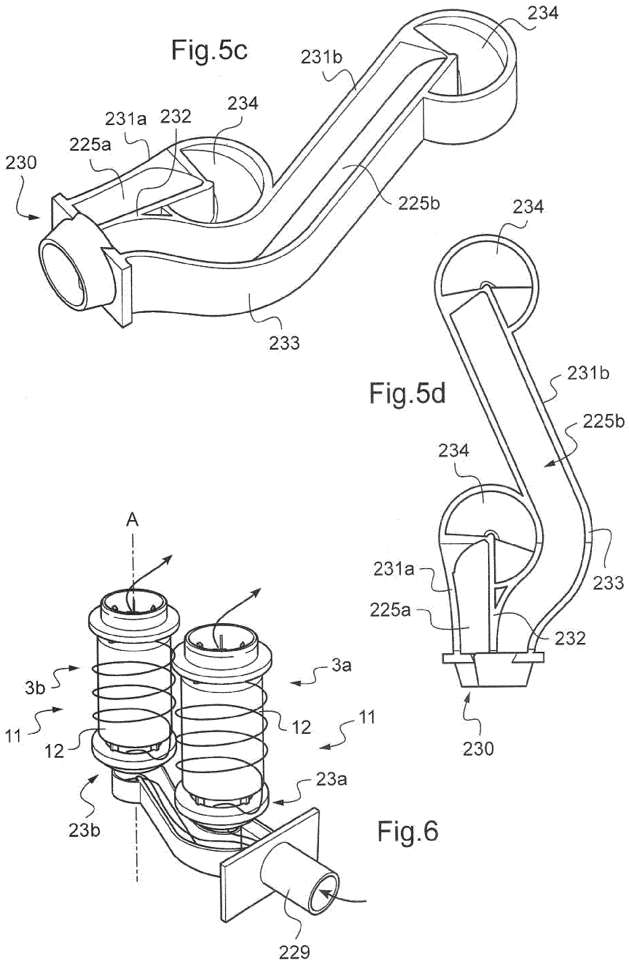

En variante, ces deux conduits 231a, 231b peuvent être réalisés sous la forme d'une pièce rapportée assemblée au boîtier d'entrée 209a. Dans ce cas on peut prévoir une pièce telle qu'illustrée sur la figure 5c comprenant une tête d'entrée de fluide 230 et deux conduits 231a et 231b. La tête d'entrée de fluide 230 est par exemple commune pour les deux conduits 231a et 231b et réalisée d'une seule pièce avec ces deux conduits 231a, 231b.

Par ailleurs que les conduits 231a et 231b délimitant les canaux d'entrée 225a, 225b, soient formés dans le boîtier d'entrée 209a ou soient une pièce rapportée, au moins un canal d'entrée 225a, 225b est conformé pour entraîner un tournoiement du fluide.

Le tournoiement du fluide est généré par la forme cylindrique des cavités 228a, 228b.

Le mouvement du fluide est représenté de façon schématique par les flèches sur la figure 5b.

De plus, on peut prévoir qu'un conduit, par exemple le deuxième conduit 231b définissant le deuxième canal d'entrée 225b, présente une forme coudée 233 de sorte que le fluide s'infléchit lorsqu'il arrive contre cette forme coudée 233, comme cela est illustré de façon schématique par les flèches sur la figure 5b.

Cette forme coudée 233 est adjacente à l'extrémité arrondie du premier canal d'entrée 225a débouchant dans un bol d'alimentation du boîtier d'entrée 209a.

En outre, comme cela est visible sur les figures 5c, 5d, un conduit 231a, 231b peut comporter une rampe 234 de guidage de fluide sensiblement hélicoïdale.

Plus précisément, cette rampe 234 forme le début d'une hélice. La rampe 234 de guidage est agencée en amont de l'extrémité d'entrée 23a, 23b du noyau 11. Ainsi, cette rampe 234 forme un tremplin pour le flux d'air qui permet d'amorcer un mouvement hélicoïdal en descente autour du noyau 11.

De plus, comme schématisé par les flèches sur la figure 6, ce mouvement de tournoiement continue le long du noyau 11 des modules de chauffe 3a, 3b.

Le fluide suit donc une trajectoire sensiblement hélicoïdale sans nécessiter de nervures hélicoïdales sur la surface externe des noyaux 11 des modules de chauffe 3a, 3b.

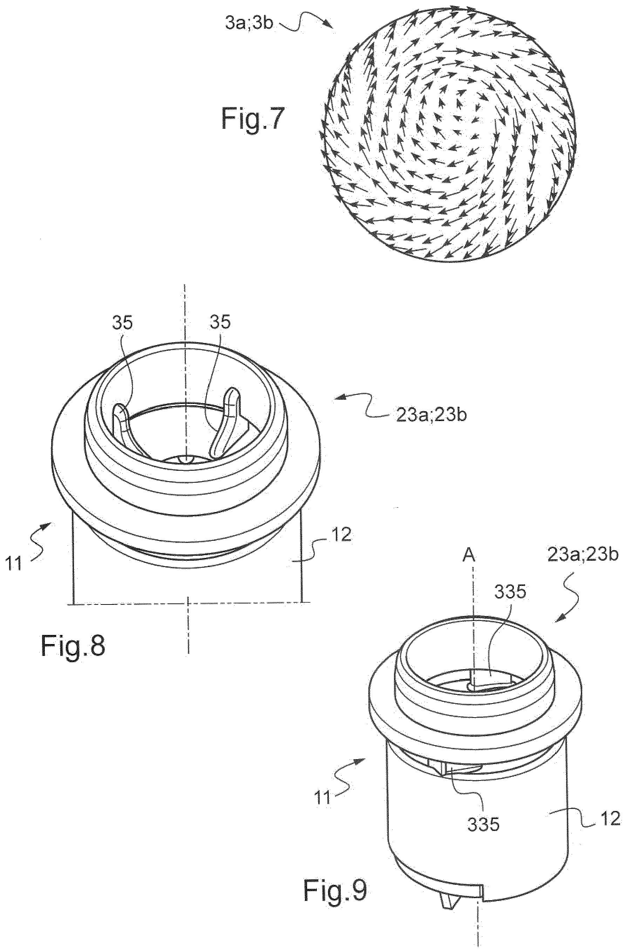

Le mouvement de tournoiement du fluide à l'entrée d'un circuit de guidage d'un module de chauffe 3a, 3b est schématisé par les flèches sur la figure 7.

De façon analogue au boîtier d'entrée 209a, le boîtier de sortie (non représenté sur les figures 5a à 7) peut comporter des conduits similaires aux conduits 231a, 231b tels que décrits ci-dessus, qui peuvent être solidaires du boîtier de sortie ou une pièce rapportée au boîtier de sortie.

Trois modes de réalisation du boîtier d'entrée 9a, 109a, 209a ont été décrits précédemment, bien entendu les caractéristiques d'un mode de réalisation peuvent être combinées avec celles d'un autre mode de réalisation.

Par ailleurs, quel que soit le mode de réalisation du boîtier d'entrée 9a, 109a, 209a, on peut prévoir des déflecteurs 35 comme représentés à la figure 8, formant liaison entre le corps 12 du noyau 11 permettant de définir le circuit de guidage et l'extrémité d'entrée 23a, 23b du noyau 11. Les déflecteurs 35 peuvent être répartis régulièrement selon un pas angulaire prédéfini. Bien sûr, les déflecteurs 35 peuvent être répartis irrégulièrement.

De façon analogue, de tels déflecteurs 35 peuvent être prévus entre le corps 12 du noyau 11 et l'extrémité de sortie.

Selon le mode de réalisation illustré sur la figure 8, ces déflecteurs 35 font partie du noyau 11. Plus précisément, ces déflecteurs 35 peuvent être réalisés d'une seule pièce avec le noyau 11.

En complément ou en alternative, les déflecteurs 35 peuvent être agencés au niveau du boîtier d'entrée 9a, 109a, 209a, et/ou de sortie 9b, 109b, 209b.

Le fluide arrivant par l'extrémité d'entrée 23a, 23b est dirigé vers le circuit de guidage défini entre la surface externe du corps 12 du noyau 11 et la surface interne de l'enveloppe 13a, 13b et arrose l'ensemble du circuit de guidage sur toute sa surface.

De façon analogue, au niveau de la sortie du fluide, le fluide ayant circulé dans le circuit de guidage est dirigé vers l'extrémité de sortie de façon à être évacué via le boîtier de sortie 9b, 109b, 209b.

Les déflecteurs 35 se trouvent donc dans la trajectoire du fluide et forment alors des perturbateurs 35 de l'écoulement du fluide.

Ces déflecteurs 35 peuvent être agencés radicalement. Plus précisément, ces déflecteurs 35 sont orientés de façon sensiblement radiale par rapport à l'axe longitudinal A d'un module de chauffe 3a, 3b, comme dans l'exemple illustré sur la figure 8.

Par ailleurs, dans l'exemple illustré sur la figure 8, les déflecteurs 35 présentent une forme générale sensiblement triangulaire. Les bordures des déflecteurs 35 sont par exemple sensiblement arrondies.

Selon une alternative préférée illustrée sur la figure 9, les déflecteurs 335 sont agencés en s'étendant selon le sens du tournoiement du fluide généré tel qu'expliqué précédemment, par la forme du canal d'entrée 25, 125, 225a, 225b.

Ces déflecteurs 335 sont donc tangents au sens de tournoiement du fluide.

Selon l'exemple illustré sur la figure 9, les déflecteurs 335 sont réalisés sous la forme de languettes sensiblement convexes, avec leur convexité orientée vers l'extérieur du noyau tel.

L'agencement des déflecteurs 335 selon le sens de tournoiement du fluide permet de ne pas « casser » le mouvement de tournoiement du fluide généré en amont du circuit de guidage du fluide. Ainsi, le tournoiement du fluide, en particulier le mouvement hélicoïdal du fluide, se poursuit le long du circuit de guidage autour du noyau 11. On évite ainsi que le fluide ne circule linéairement dans le circuit de guidage, de façon sensiblement parallèle à l'axe longitudinal A.

Ainsi, on peut créer "naturellement" un mouvement de tournoiement du fluide, avant l'arrivée du fluide dans le circuit de guidage entre le noyau 11 et l'enveloppe cylindrique 13, sans l'apport d'hélices matérialisées par exemple sous la forme d'une rainure hélicoïdale sur la surface externe du noyau 11.

Ce tournoiement peut donc être généré par la forme cylindrique des cavités 28a, 28b, 128a, 128b des bols d'alimentation 27a, 27b, 127a, 127b et également grâce à une rampe de guidage 234 amorçant la forme d'hélice.

Enfin, si des déflecteurs 35, 335 sont nécessaires pour des besoins spécifiques entre les bols d'alimentation du boîtier d'entrée 9a, 109a, 209a et les noyaux 11 des modules de chauffe 3a, 3b, la forme de ces déflecteurs 35,335 doit être prévue pour ne pas perturber la circulation du fluide, risquant d'annuler l'effet de tournoiement généré dans le canal d'entrée 25, 125, 225a, 225b. À cet effet, les déflecteurs 335 sont de préférence tangents au sens de tournoiement généré.

Le fluide suit donc un mouvement, par exemple ascendant autour du noyau 11, en conservant le tournoiement généré en amont, et donc suit un mouvement hélicoïdal permettant d'augmenter le transfert thermique entre l'élément chauffant 13a, 13b et le fluide.

Bien entendu les différents modes de réalisation du noyau 11 représentés aux figures 8 et 9 peuvent être combinables avec n'importe quel mode de réalisation représenté aux figures 1 à 7.

## Revendications

1. Dispositif de conditionnement thermique (1) d'un fluide pour véhicule automobile, comprenant :
- au moins un module thermique (3a, 3b) comprenant un noyau (11) et une enveloppe (13a, 13b) définissant un circuit de guidage du fluide à chauffer ou refroidir entre le noyau (11) et l'enveloppe (13a, 13b),
- un boîtier d'entrée de fluide (9a, 109a, 209a) et un boîtier de sortie de fluide (9b), le boîtier d'entrée (9a, 109a, 209a) présentant au moins un canal d'entrée (25, 225a, 225b) du fluide communiquant avec le circuit de guidage du fluide, le canal d'entrée (25, 225a, 225b) du fluide présentant au moins une portion sensiblement courbe conformée pour générer un mouvement de tournoiement du fluide,
**caractérisé**
**en ce que** le boîtier d'entrée (9a, 109a, 209a) comprend deux bols d'alimentation (27a, 27b, 127a, 127b, 227a, 227b) de forme sensiblement cylindrique raccordé fluidiquement au circuit de guidage d'un module thermique et en ce que ledit dispositif comporte au moins deux modules thermiques (3a, 3b) agencés côte à côte en parallèle et dans lequel le canal d'entrée (25) présente une portion tangente aux deux bols d'alimentation (27a, 27b) du boîtier d'entrée (9a).

2. Dispositif selon la revendication 1, dans lequel le canal d'entrée (225a, 225b) comporte une rampe de guidage (234) du fluide de forme sensiblement hélicoïdale autour d'un axe sensiblement parallèle à un axe longitudinal (A) du module thermique (3a, 3b).

3. Dispositif selon l'une des revendications 1 ou 2, dans lequel le canal d'entrée (225b) présente une forme sensiblement coudée.

4. Dispositif selon la revendication 3, comprenant deux conduits (231a, 231b) séparés par une paroi de séparation (232) de façon à définir les deux canaux d'entrée (225a, 225b) de fluide.

5. Dispositif selon la revendication 4, dans lequel lesdits conduits (231a, 231b) comportent respectivement une extrémité communiquant fluidiquement avec un circuit de guidage du fluide associé et présentant une rampe de guidage (234) du fluide de forme sensiblement hélicoïdale autour d'un axe sensiblement parallèle à un axe longitudinal (A) du module thermique (3a, 3b).

6. Dispositif selon l'une des revendications 4 ou 5, dans lequel les deux conduits (231a, 231b) présentent une tête d'entrée de fluide (230) commune, et dans lequel les deux conduits (231a, 231b) et la tête d'entrée de fluide (230) commune sont réalisés d'une seule pièce rapportée sur le boîtier d'entrée (209a).

7. Dispositif selon l'une des revendications 4 ou 5, dans lequel les deux conduits (231a, 231b) sont formés d'une seule pièce avec le boîtier d'entrée (209a).

8. Dispositif selon l'une quelconque des revendications précédentes, dans lequel boîtier d'entrée (9a, 109a, 209a) présente une tubulure d'admission (29, 129, 229) de fluide agencée radialement par rapport à un axe longitudinal (A) d'un module thermique (3a, 3b).

9. Dispositif selon l'une quelconque des revendications précédentes, dans lequel le noyau (11) d'un module thermique (3a, 3b) comporte un corps de noyau (12) autour duquel est défini le circuit de guidage du fluide et une extrémité d'entrée (23a, 23b) reçue dans une cavité (28a, 28b) du boîtier d'entrée, et ledit dispositif comprenant des déflecteurs (35, 335) disposés entre le corps du noyau (12) et l'extrémité d'entrée (23a, 23b) du noyau (11).

10. Dispositif selon la revendication 9, dans lequel les déflecteurs (35) sont agencés radialement par rapport à un axe longitudinal du module thermique.

11. Dispositif selon la revendication 10, dans lequel les déflecteurs (335) sont agencés selon le sens de tournoiement du fluide généré par le canal d'entrée du fluide (25, 125, 225a, 225b).

12. Dispositif selon l'une des revendications 9 à 11, dans lequel les déflecteurs (35, 335) sont réalisés d'une seule pièce avec le noyau (11).

13. Dispositif selon l'une quelconque des revendications 9 à 11, dans lequel le boîtier d'entrée (9a, 109a, 209a) comprend les déflecteurs (35, 335).

14. Appareil de chauffage et/ou climatisation pour véhicule automobile, **caractérisé en ce qu'**il comprend au moins un dispositif de conditionnement thermique (1) selon l'une quelconque des revendications précédentes.

## Patentansprüche

1. Vorrichtung zur thermischen Konditionierung (1) eines Fluids für ein Kraftfahrzeug, die enthält:
- mindestens ein einen Kern (11) und eine Hülle (13a, 13b) enthaltendes thermisches Modul (3a, 3b), das einen Führungskreislauf des zu erwärmenden oder abzukühlenden Fluids zwischen dem Kern (11) und der Hülle (13a, 13b) definiert,
- ein Fluideingangsgehäuse (9a, 109a, 209a) und ein Fluidausgangsgehäuse (9b), wobei das Eingangsgehäuse (9a, 109a, 209a) mindestens einen Eingangskanal (25, 225a, 225b) des Fluids aufweist, der mit dem Führungskreislauf des Fluids in Verbindung steht,
wobei der Eingangskanal (25, 225a, 225b) des Fluids mindestens einen im Wesentlichen krummen Abschnitt aufweist, der ausgebildet ist, um eine Drehbewegung des Fluids zu erzeugen, **dadurch gekennzeichnet, dass** das Eingangsgehäuse (9a, 109a, 209a) zwei Zuführtöpfe (27a, 27b, 127a, 127b, 227a, 227b) von im Wesentlichen zylindrischer Form enthält, die fluidisch mit dem Führungskreislauf verbunden sind, und dass die Vorrichtung mindestens zwei thermische Module (3a, 3b) aufweist, die parallel nebeneinander angeordnet sind, und wobei der Eingangskanal (25) einen die zwei Zuführtöpfe (27a, 27b) des Eingangsgehäuses (9a) tangierenden Abschnitt aufweist.

2. Vorrichtung nach Anspruch 1, wobei der Eingangskanal (225a, 225b) eine im Wesentlichen schraubenförmige Führungsrampe (234) des Fluids um eine Achse im Wesentlichen parallel zu einer Längsachse (A) des thermischen Moduls (3a, 3b) aufweist.

3. Vorrichtung nach einem der Ansprüche 1 oder 2, wobei der Eingangskanal (225b) eine im Wesentlichen gebogene Form aufweist.

4. Vorrichtung nach Anspruch 3, die zwei Leitungen (231a, 231b) enthält, die durch eine Trennwand (232) getrennt sind, um die zwei Fluideingangskanäle (225a, 225b) zu definieren.

5. Vorrichtung nach Anspruch 4, wobei die Leitungen (231a, 231b) je ein Ende aufweisen, das fluidisch mit einem zugeordneten Führungskreislauf des Fluids in Verbindung steht und eine im Wesentlichen schraubenförmige Führungsrampe (234) des Fluids um eine Achse im Wesentlichen parallel zu einer Längsachse (A) des thermischen Moduls (3a, 3b) aufweist.

6. Vorrichtung nach einem der Ansprüche 4 oder 5, wobei die zwei Leitungen (231a, 231b) einen gemeinsamen Fluideingangskopf (230) aufweisen, und wobei die zwei Leitungen (231a, 231b) und der gemeinsame Fluideingangskopf (230) aus einem Stück hergestellt sind, das auf das Eingangsgehäuse (209a) aufgesteckt ist.

7. Vorrichtung nach einem der Ansprüche 4 oder 5, wobei die zwei Leitungen (231a, 231b) aus einem Stück mit dem Eingangsgehäuse (209a) geformt sind.

8. Vorrichtung nach einem der vorhergehenden Ansprüche, wobei das Eingangsgehäuse (9a, 109a, 209a) einen Fluidansaugstutzen (29, 129, 229) aufweist, der radial bezüglich einer Längsachse (A) eines thermischen Moduls (3a, 3b) angeordnet ist.

9. Vorrichtung nach einem der vorhergehenden Ansprüche, wobei der Kern (11) eines thermischen Moduls (3a, 3b) einen Kernkörper (12), um den herum der Führungskreislauf des Fluids definiert ist, und ein Eingangsende (23a, 23b) aufweist, das in einem Hohlraum (28a, 28b) des Eingangsgehäuses aufgenommen wird, und die Vorrichtung Leitbleche (35, 335) enthält, die zwischen dem Körper des Kerns (12) und dem Eingangsende (23a, 23b) des Kerns (11) angeordnet sind.

10. Vorrichtung nach Anspruch 9, wobei die Leitbleche (35) bezüglich einer Längsachse des thermischen Moduls radial angeordnet sind.

11. Vorrichtung nach Anspruch 10, wobei die Leitbleche (335) gemäß der Drehrichtung des Fluids angeordnet sind, die vom Eingangskanal des Fluids (25, 125, 225a, 225b) erzeugt wird.

12. Vorrichtung nach einem der Ansprüche 9 bis 11, wobei die Leitbleche (35, 335) aus einem Stück mit dem Kern (11) hergestellt sind.

13. Vorrichtung nach einem der Ansprüche 9 bis 11, wobei das Eingangsgehäuse (9a, 109a, 209a) die Leitbleche (35, 335) enthält.

14. Heiz- und/oder Klimatisierungsgerät für ein Kraftfahrzeug, **dadurch gekennzeichnet, dass** es mindestens eine Vorrichtung zur thermischen Konditionierung (1) nach einem der vorhergehenden Ansprüche enthält.

## Claims

1. Device for thermally conditioning (1) a fluid for a motor vehicle, comprising:
- at least one thermal module (3a, 3b) comprising a core (11) and a shell (13a, 13b) defining a circuit for guiding the fluid that is to be heated or cooled between the core (11) and the shell (13a, 13b),
- a fluid inlet box (9a, 109a, 209a) and a fluid outlet box (9b), the inlet box (9a, 109a, 209a) having at least one inlet channel (25, 225a, 225b) for the fluid communicating with the circuit for guiding the fluid,
the inlet channel for the fluid (25, 225a, 225b) having at least one substantially curved portion which is configured in order to generate a swirling movement in the fluid, **characterized in that** the inlet box (9a, 109a, 209a) comprises two feed bowls (27a, 27b, 127a, 127b, 227a, 227b) having a substantially cylindrical shape fluidly connected to the guiding circuit of a thermal module and **in that** said device includes at least two thermal modules (3a, 3b) arranged side by side in parallel and in which the inlet channel (25) exhibits a portion that is tangential to the two feed bowls (27a, 27b) of the inlet box (9a).

2. Device according to Claim 1, in which the inlet channel (225a, 225b) includes a guide ramp (234) for the fluid of substantially helicoidal form around an axis that is substantially parallel to a longitudinal axis (A) of the thermal module (3a, 3b).

3. Device according to either of Claims 1 and 2, in which the inlet channel (225b) exhibits a shape that is substantially in the form of an elbow.

4. Device according to Claim 3, comprising two conduits (231a, 231b) separated by a separating wall (232) in such a way as to define the two fluid inlet channels (225a, 225b).

5. Device according to Claim 4, in which said conduits (231a, 231b) respectively include an extremity communicating fluidly with an associated circuit for guiding the fluid and exhibiting a guide ramp (234) for the fluid of substantially helicoidal form around an axis that is substantially parallel to a longitudinal axis (A) of the thermal module (3a, 3b).

6. Device according to either of Claims 4 and 5, in which the two conduits (231a, 231b) exhibit a common fluid inlet header (230), and in which the two conduits (231a, 231b) and the common fluid inlet header (230) are realized integrally with the inlet box (209a).

7. Device according to either of Claims 4 and 5, in which the two conduits (231a, 231b) are formed integrally with the inlet box (209a).

8. Device according to one of the preceding claims, in which the inlet box (9a, 109a, 209a) exhibits a fluid inlet manifold (29, 129, 229) arranged radially in relation to a longitudinal axis (A) of a thermal module (3a, 3b).

9. Device according to one of the preceding claims, in which the core (11) of a thermal module (3a, 3b) includes a core body (12), defined around which is the circuit for guiding the fluid and an inlet extremity (23a, 23b) accommodated inside a cavity (28a, 28b) of the inlet box, said device comprising deflectors (35, 335) disposed between the core body (12) and the inlet extremity (23a, 23b) of the core (11).

10. Device according to Claim 9, in which the deflectors (35) are arranged radially in relation to a longitudinal axis of the thermal module.

11. Device according to Claim 10, in which the deflectors (335) are arranged in the direction of swirling of the fluid generated by the fluid inlet channel (25, 125, 225a, 225b).

12. Device according to one of Claims 9 to 11, in which the deflectors (35, 335) are realized integrally with the core (11).

13. Device according to one of Claims 9 to 11, in which the inlet box (9a, 109a, 209a) comprises the deflectors (35, 335).

14. Heating and/or air conditioning apparatus for a motor vehicle, **characterized in that** it comprises at least one thermal conditioning device (1) according to one of the preceding claims.
